(19)

Europäisches
Patentamt
European
Patent Office
Office européen
des brevets

(11) **EP 4 704 113 A1**

(12) **EUROPEAN PATENT APPLICATION**

(43) Date of publication:
04.03.2026  Bulletin 2026/10

(21) Application number: 24197765.1

(22) Date of filing: **30.08.2024**

(51) International Patent Classification (IPC):
**G21B 1/05** *(2006.01)*      **G21B 1/13** *(2006.01)*
**G21B 1/17** *(2006.01)*

(52) Cooperative Patent Classification (CPC):
**G21B 1/055; G21B 1/13; G21B 1/17; G21D 3/001**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Proxima Fusion GmbH**
**81369 München (DE)**

(72) Inventors:
• LION, Jorrit
  81541 München (DE)
• HERRERO, Rodrigo
  81669 München (DE)

(74) Representative: **Bardehle Pagenberg
Partnerschaft mbB
Patentanwälte Rechtsanwälte
Prinzregentenplatz 7
81675 München (DE)**

(54) **PLASMA VESSEL WITH NON-HOMOGENIOUS SHIELD**

(57)   The invention relates to a plasma vessel for a nuclear fusion reactor, comprising a neutron shield and a fusion fuel breeding blanket, the plasma vessel enclosing a plasma confinement volume. A ratio of a thickness of the fusion fuel breeding blanket to a thickness of the neutron shield varies as a function of a poloidal angle and / or of a toroidal angle from 0° to 360° of the plasma vessel by at least 5 %. The invention also relates to a stellarator comprising the plasma vessel, and a computer implemented design method for optimizing a plasma vessel for a nuclear fusion reactor as well as a corresponding computer program and computer device.

Fig.2a

## Description

The present invention relates generally to a neutron shield in a plasma vessel for a nuclear fusion reactor, as well as to a stellarator comprising the plasma vessel and a design method for optimizing the plasma vessel for the nuclear fusion reactor.

BACKGROUND

Stellarators are developed for magnetic confinement of plasmas to provide energy based on fusion reactions which occur inside the confined plasma. The plasma is confined in a plasma vessel having a vacuum chamber, comprising a breeding blanket for providing the necessary fuel for the fusion reaction. To provide the magnetic confinement in the plasma vessel, stellarators require non-planar, magnetic, plasma confinement coils with windings of a cable with superconductor material. The superconductor material allows a positive energy balance of the stellarator as the current in the cable has no electrical resistance, thereby avoiding ohmic losses of the cable during operation. Further, the use of superconductor material allows strong magnetic fields which improves the power density of the plasma and thus the power balance of a stellarator.

In nuclear fusion, isotopes like deuterium and tritium combine to form helium, releasing a significant number of high-energy neutrons. These neutrons, if left unchecked, can penetrate materials, leading to several adverse effects, including structural damage to the reactor's components, radiation-induced material degradation, and activation of materials, which could render them radioactive.

SUMMARY

Plasma vessels for fusion reactors typically comprise neutron shields. The primary function of a neutron shield is to absorb and attenuate high-energy neutrons produced during the fusion process. Neutron shields also help in maintaining the reactor's overall thermal efficiency. Neutrons escaping from the reactor core can cause energy losses. By absorbing these neutrons, the shield contributes to the moderation and thermalization of neutrons, allowing for the recovery of their kinetic energy. Additionally, by reducing the activation of surrounding materials, the neutron shield helps in minimizing radioactive waste, which is a critical factor in making fusion reactors more environmentally friendly compared to traditional fission reactors.

In this context the thickness of the plasma vessel can be adapted in accordance with the available space between the plasma vessel and the plasma confinement. In areas where the space between the plasma confinement and the plasma confinement coil is large, the thickness of the mantle (and thus of the breeding blanket and shielding) of the plasma vessel is large, and in areas where the space between the plasma confinement and the plasma confinement coil is small, the thickness of the mantle of the plasma vessel is small.

However, this approach may improve fusion fuel breeding and shielding only in areas where the available space is large. In areas where the space between the plasma confinement coils and the plasma confinement is limited, which are areas where the neutrons effect the plasma confinement coils the most, the solution of the prior art falls short. Moreover, in some regions, the increased shielding may not be necessary, leading to unnecessary use of material and potential reduction of efficiency.

Against this background, the present invention suggests a plasma vessel and a computer implemented design method for optimizing a plasma vessel as specified in the attached claims that overcome at least some of the above shortcomings.

A first aspect of the present disclosure relates to a plasma vessel for a nuclear fusion reactor. The plasma vessel comprising a neutron shield and a fusion fuel breeding blanket, the plasma vessel enclosing a plasma confinement volume. A ratio of a thickness of the fusion fuel breeding blanket to a thickness of the neutron shield varies as a function of a poloidal angle and / or of a toroidal angle from 0° to 360° of the plasma vessel by at least 5 %.

The ratio of a thickness of the fusion fuel breeding blanket to a thickness of the neutron shield may vary as a function of a poloidal angle and / or of a toroidal angle from 0° to 360° of the plasma vessel by at least 5 %, preferably at least 7%, preferably at least 9%, preferably at least 10%, preferably at least 15%, preferably at least 20%, preferably at least 35%, preferably at least 30%, preferably at least 35%, preferably at least 40%, most preferably at least 43%.

The ratio of a thickness of the fusion fuel breeding blanket to a thickness of the neutron shield may vary as a function of a poloidal angle and / or of a toroidal angle from 0° to 360° of the plasma vessel by at most 800 %, preferably at most 850 %, preferably at most 800 %, preferably at most 750 %, most preferably at most 745 %.

The ratio of a thickness of the fusion fuel breeding blanket to a thickness of the neutron shield varies as a function of a poloidal angle and / or of a toroidal angle in a range of 360°, preferably in a range of 320°, preferably in a range of 280°, preferably in a range of 240°, preferably in a range of 200°, preferably in a range of 160°, preferably in a range of 120°, preferably in a range of 80°, preferably in a range of 40° of the plasma vessel by at least 5 % and/or at most 25%.

The angle range encompasses positive and negative angles. For instance, angle range starting from 0° to 360° as well as starting from -30° to 330° both encompasses a range of 360°. Moreover, an angular range may encompass any starting and/or end point, i.e., a range of 60° may be an angle from 30° to 90°, or may be an angle from 210° to 180° etc.

It may be advantageous to provide the plasma vessel with the fusion fuel breeding blanket and the neutron shield at varying ratios to optimize the shielding and the breeding of tritium in the plasma vessel. For example, in areas where the available space between the plasma confinement and the plasma confinement coils of the nuclear fusion reactor is limit, it may be beneficial to provide a larger thickness of shielding, relative to the thickness of the breeding blanket. In contrast, in regions where the space between the plasma confinement and the plasma confinement coils is large, a certain necessary thickness of the plasma vessel may be shield, while the remaining space between the plasma confinement and the plasma vessel may be breeding blanket, optimizing the available reaction fuel and energy/heat extraction.

In some embodiments, the ratio of the thickness of the breeding blanket to the thickness of the neutron shield increases based on a distance between the plasma confinement volume and a position of a plasma confinement coil of the nuclear fusion reactor arranged outside the plasma vessel.

By adjusting the proportion of the individual components of the plasma vessel, the shielding and breeding of tritium can be maximized in accordance with the available space. For example, when the plasma confinement coils are close to the plasma confinement volume, a higher proportion of shielding may be necessary to protect the plasma confinement coils from damage. When the plasma coils have a relatively large distance to the plasma confinement volume, a higher proportion of fusion fuel breeding blanket may be present to increase the energy extraction from the plasma and the tritium generation without compromising the shielding of high-energy neutrons.

In some embodiments, the thickness of the neutron shield varies in a range of 3% to 97%, preferably in a range of 5% to 95%, more preferably in a range of 7% to 93 % and most preferably in a range of 10% to 90% of a maximal radius of the vacuum vessel measured from a center of the fusion reactor; and / or wherein a thickness of the breeding blanket varies in a range of 3% to 97%, preferably in a range of 5% to 95%, more preferably in a range of 7% to 93% and most preferably in a range of 10% to 90% of a maximal radius of the vacuum vessel measured from the center point of the fusion reactor; and/or wherein a rate of change of the ratio of the thickness of the fusion fuel breeding blanket to the thickness of the neutron shield varies as a function of the poloidal angle and/or of the toroidal angle from 0° to 360°.

In some embodiments, the poloidal angle and / or of the toroidal angle encompasses a range of 360°, preferably a range of 320°, preferably a range of 280°, preferably a range of 240°, preferably a range of 200°, preferably a range of 160°, preferably a range of 120°, preferably a range of 80°, preferably a range of 40° of the plasma vessel.

In some embodiments, the ratio of the thickness of the fusion fuel breeding blanket to the thickness of the neutron shield varies at a rate of 10% per 90°, preferably at a rate of 20% per range of 90°, preferably at a rate of 30% per range of 90°, preferably at a rate of 40% per range of 90°.

In some embodiments, the ratio of the thickness of the fusion fuel breeding blanket to the thickness of the neutron shield varies at a rate of 10% per 65°, preferably at a rate of 20% per range of 65°, preferably at a rate of 30% per range of 65°, preferably at a rate of 40% per range of 65°.

In some embodiments, the ratio of the thickness of the fusion fuel breeding blanket to the thickness of the neutron shield varies at a rate of 10% per 45°, preferably at a rate of 20% per range of 45°, preferably at a rate of 30% per range of 45°, preferably at a rate of 40% per range of 45°.

In some embodiments, the ratio of the thickness of the fusion fuel breeding blanket to the thickness of the neutron shield varies at a rate of 10% per 25°, preferably at a rate of 20% per range of 25°, preferably at a rate of 30% per range of 25°, preferably at a rate of 40% per range of 25°.

In some embodiments, the ratio of the thickness of the fusion fuel breeding blanket to the thickness of the neutron shield varies at a rate of 10% per 5°, preferably at a rate of 20% per range of 5°, preferably at a rate of 30% per range of 5°, preferably at a rate of 40% per range of 5°.

In some embodiments, the breeding blanket comprises a flow structure configured for guiding a flow of a liquid fusion fuel, preferably Tritium, a breeding material, preferably a liquid lithium alloy, preferably a lead-lithium (PbLi) alloy, and / or configured for guiding a flow of a thermal energy extraction liquid, preferably water, through at least a portion of the breeding blanket.

With the above, improved energy and tritium extraction can be provided by the fusion fuel breeding blanket. In particular, heat and tritium can be extracted from the liquid fusion fuel flowing in a direction away from the plasma confinement volume.

In some embodiments, the neutron shield comprises tungsten or a tungsten alloy, preferably, wherein the neutron shield is essentially formed from tungsten or a tungsten alloy.

The high atomic number and density of tungsten is effective in stopping high-energy neutrons and gamma rays. This reduces the risk of any high-energy neutrons exiting the plasma vessel and penetrating materials, leading to several adverse effects.

An embodiment according to aspects of the present disclosure is a Stellarator, comprising a plasma vessel according to any one of preceding embodiments; and a plurality of non-planar, superconducting plasma confinement coils for generating a magnetic field for confining a fusion plasma within the plasma confinement region.

By providing the plasma vessel in a stellarator, the further components of the stellarator, such as the superconducting plasma confinement coils are efficiently protected from the high-energy neutrons exiting the plasma.

In some embodiments, the plurality of plasma confinement coils is formed such that, in operation of the Stellarator as a nuclear fusion reactor, a density of nuclear fusion reactions is larger in a center region of the plasma confinement volume than in a top and / or bottom region of the plasma confinement volume; and wherein the ratio of the thickness of the breeding blanket to the thickness of the neutron shield, is larger in the top and / or in the bottom region of the plasma vessel, by at least 5 %, preferably by at least 10%, preferably by at least 20%, preferably by at least 50%, preferably by at least 80%, preferably by at least 100%, preferably by at least 200%, preferably by at least 500%, preferably by at least 700%, preferably by at least 1000% than in the central region of the plasma vessel.

In some embodiments, the stellarator comprising a thermal energy extraction system, operably connected to the breeding blanket, and configured to provide the flow of the thermal energy extraction liquid through a portion of the breeding blanket to extract thermal energy generated by nuclear fusion; wherein, optionally, the thermal energy extraction system and the breeding blanket are configured to provide, during fusion operation of the stellarator, an overall water content of at least 5% by volume, preferably at least 7% by volume, preferably at least 10% by volume, preferably at least 12 % by volume, and most preferably at least 12.5 %, optionally and/or at most 20% by volume, preferably at most 18% by volume, preferably at most 16 %, preferably at most 15 % and most preferably at most 12.5 % in the fusion fuel breeding blanket 112.

The energy extraction system allows to extract excessive thermal energy from the fusion fuel breeding blanket, thereby generating power from the fusion reaction and avoiding extensive heat forming inside the fusion fuel breeding blanket.

In some embodiments, the stellarator further comprising a fusion fuel extraction system, operably connected to the breeding blanket, and configured to provide the flow of the liquid fusion fuel breeding material through a portion of the breeding blanket to generate nuclear fusion fuel by a neutron capture process.

The fusion fuel extraction system allows to control the amount of tritium within the fusion fuel breeding blanket, thereby increasing the reliability and stability of the reaction.

An embodiment according to aspects of the present disclosure is a computer implemented design method for optimizing a plasma vessel for a nuclear fusion reactor, the plasma vessel enclosing a plasma confinement volume and comprising a neutron shield and a fusion fuel breeding blanket. The method comprising the steps of obtaining data indicating a distance from a magnetic plasma confinement coil of the nuclear fusion reactor to the plasma confinement volume of the nuclear fusion reactor; obtaining data indicating a distance from an outer wall of the plasma vessel to the plasma confinement volume of the nuclear fusion reactor; and determining, based on the obtained data, a ratio of a thickness of the fusion fuel breeding blanket to a thickness of the neutron shield as a function of a poloidal angle and / or of a toroidal angle from 0° to 360° of the plasma vessel.

The above method allows to optimize the ratio of the thickness of the fusion fuel breeding blanket to the thickness of the neutron shield, such that the breeding of tritium and the extraction of thermal energy is maximized without compromising the safety of the nuclear fusion reactor.

In some embodiments, the method for optimizing the neutron shield of a plasma vessel further comprising obtaining data indicative of a neutron flux and / or fusion reaction density associated with the plasma confinement volume; wherein determining the ratio further comprises determining the ratio based on the neutron flux and / or fusion reaction density.

Since the neutron flux can vary significantly based on the shape of the plasma, the above allows to further improve the breeding of tritium and the extraction of thermal energy is maximized without compromising the safety of the nuclear fusion reactor.

In some embodiments the data indicative of a neutron flux and / or fusion reaction density associated with the plasma confinement volume includes information related to a vector of the neutron flux leaving the confinement volume.

In some embodiments, the data indicative of the neutron flux indicates a vector of the neutron flux leaving the confinement volume.

In some embodiments, the method for optimizing the neutron shield of a plasma vessel further comprising; obtaining material data associated with the neutron shield and the fusion fuel breeding blanket, the material data preferably comprising an attenuation coefficient for fast neutrons for the neutron shield and optionally an attenuation coefficient for fast neutrons for the fusion fuel breeding blanket, wherein determining the ratio of the thickness of the fusion fuel breeding blanket to the thickness of the neutron shield based further comprises: determining the ratio of the thickness of the fusion fuel breeding blanket to the thickness of the neutron shield based on the obtained material data.

Both the fusion fuel breeding blanket as well as the neutron shielding attenuate fast neutrons. Typically, the attenuation of the neuron shield is significantly higher than the attenuation of the fusion fuel breeding blanket. By considering also the attenuation coefficient of both elements, the breeding of tritium and the extraction of thermal energy is further maximized while compromising the safety of the nuclear fusion reactor is avoided.

An embodiment according to aspects of the present disclosure is a computer program comprising instructions which, when executed by a processor, cause the processor to execute the computer implemented design method for optimizing a plasma vessel for a nuclear fusion reactor.

An embodiment according to aspects of the present disclosure is a computing device comprising a processor and instructions which, when executed by the processor, cause the processor to execute the computer implemented design method for optimizing a plasma vessel for a nuclear fusion reactor.

BRIEF DESCRIPTION OF THE DRAWINGS

Fig. 1 shows a schematic view of a stellarator;

Fig. 2a, Fig. 2b and Fig. 2c show cross sections of the plasma vessel in a toroidal direction;

Fig. 3 shows a flow diagram of an exemplary design method for optimizing a plasma vessel for a nuclear fusion reactor;

Fig. 4 shows an exemplary mean neutron flux density simulation of the plasma in the stellarator;

Fig. 5 shows a cross section of the exemplary mean neutron flux density simulation of the plasma in the stellarator in the toroidal direction.

Fig. 6 shows an exemplary neutron shield thickness distribution.

DETAILED DESCRIPTION

In the following, a detailed description with reference to the figures is provided. In the figures, identical reference signs refer to identical elements.

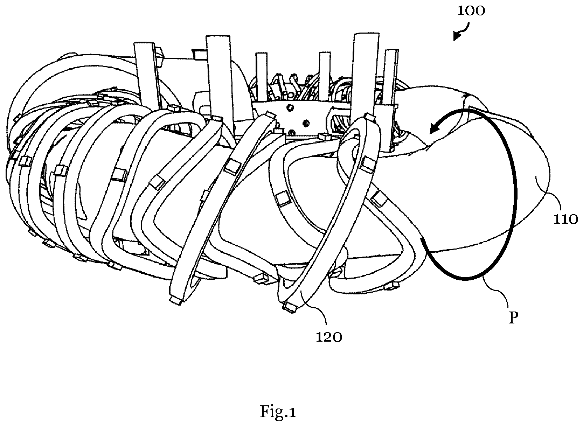

Fig. 1 shows a schematic view of a stellarator 100. The stellarator 100 comprises a plasma vessel 110 for enclosing a plasma confinement volume 113 and plasma confinement coils 120. Other elements of the stellarator 200 are removed for clarity and will not be discussed further. In Fig. 1, the stellarator 200 is shown for magnetic confinement of a plasma 130. Inside the plasma 130, nuclear fusion reactions occur and release energy. The generated energy is extracted from the reactor 200 through an energy extraction system (not shown). The required magnetic confinement of the plasma 130 in the stellarator 200 is achieved through plasma confinement coil 120 and further additional plasma confinement coils shown in Fig. 1 without reference numerals.

The plasma vessel 110 may have a substantially circular, preferably a twisted toroidal shape. Fig. 1 shows an exemplary plasma vessel 110 having a substantially twisted toroidal shape. The plasma vessel 110 has a poloidal direction P and a toroidal direction (not shown) perpendicular to the poloidal direction. Each position of the plasma vessel 110 is associated with a poloidal-/toroidal-angle coordinate.

As understood by the skilled person, a toroidal direction may be the direction that runs along the larger circular path around the central void of the torus of the plasma vessel. In a non-limiting example, the toroidal direction may be somewhat similar to a circle following the main circular path of the torus.

The term "poloidal angle" as used in here may refer to the angular coordinate in a plane that may be essential perpendicular to the toroidal direction of the stellarator. The poloidal angle may be measured in a cross-sectional plane of the plasma vessel, essentially extending around the minor axis of the torus. The poloidal angle may be important for describing the geometry and positioning of magnetic field lines and structural components within the stellarator, as these affect plasma confinement and stability.

The plasma vessel 110 encloses a plasma confinement volume 113 for confining the plasma 130. Preferably, the plasma confinement volume 113 is (substantially) a vacuum. Even though the plasma vessel 110 may comprise of a multitude of elements, for the sake of clarity, only the two main portions of the plasma vessel 110, a neutron shield 111 and a fusion fuel breeding blanket 112 are illustrated in the drawings and discussed in the following. The neutron shield 111 and the fusion fuel breeding blanket 112 maybe two layers of the plasma vessel 110, wherein the fusion fuel breeding blanket 112 may define the plasma confinement volume 113 and the neutron shield 111 may be positioned adjacent the fusion fuel breeding blanket 112, at a larger distance relative to the plasma confinement volume 113. Substantially, the entire plasma confinement volume 113 may be defined by the plasma confinement volume 113, i.e., substantially the entire plasma confinement volume 113 may be enclosed by the fusion fuel breeding blanket 112.

A ratio of a thickness of the fusion fuel breeding blanket to a thickness of the neutron shield varies as a function of a poloidal angle and / or of a toroidal angle from 0° to 360° of the plasma vessel by at least 5 %. Preferably, the ratio of the thickness of the fusion fuel breeding blanket to the thickness of the neutron shield varies by at least 5 %, preferably at least 7%, preferably at least 9%, preferably at least 10%, preferably at least 15%, preferably at least 20%, preferably at least 35%, preferably at least 30%, preferably at least 35%, preferably at least 40%, most preferably at least 43%.

Preferably, the ratio of the thickness of the fusion fuel breeding blanket to the thickness of the neutron shield vary as a function of a poloidal angle and / or of a toroidal angle from 0° to 360° of the plasma vessel by at most 800 %, preferably at most 850 %, preferably at most 800 %, preferably at most 750 %, most preferably at most 745 %.

The ratio of a thickness of the fusion fuel breeding blanket to a thickness of the neutron shield may vary as a function of a poloidal angle and / or of a toroidal angle in a range of 360°, preferably in a range of 320°, preferably in a range of 280°, preferably in a range of 240°, preferably in a range of 200°, preferably in a range of 160°, preferably in a range of 120° , preferably in a range of 80°, preferably in a range of 40° of the plasma vessel by at least 5 % and/or at most 25%.

The angle range encompasses positive and negative angles. For instance, angle range starting from 0° to 360° as well as starting from -30° to 330° both encompasses a range of 360°. Moreover, an angular range may encompass any starting and/or end point, i.e., a range of 60° may be an angle from 30° to 90°, or may be an angle from 210° to 180° etc.

The fusion fuel breeding blanket 112 generally serves multiple essential functions contributing to the reactor's overall efficiency and sustainability. For example, the fusion fuel breeding blanket 112 may be configured to produce tritium, a key fuel isotope for fusion reactions, through neutron capture reactions. This is important as tritium is consumed at a rapid rate during the fusion reaction, such that the breeding ensures a self-sustaining fuel cycle. Additionally, the fusion fuel breeding blanket 112 may play a vital role in energy recovery. The fusion fuel breeding blanket 112 may be configured to interact with the high-energy neutrons, such that their kinetic energy is transferred into the fusion fuel breeding blanket 112 and converted into heat. This heat may be used to generate steam, which drives turbines to produce electricity, thereby improving the overall energy efficiency of the reactor. Moreover, the fusion fuel breeding blanket 112 may be configured to provide a layer of protection to the reactor's structural components by moderating and reducing the energy of the escaping neutrons, minimizing radiation damage and enhancing the longevity of the reactor.

High-energy neutrons may also be referred to as fast neutrons. Generally speaking, fast neutrons are neutrons having an energy of at least 0.08 MeV, preferably of at least 0.09 MeV and most preferably of at least 0.10 MeV. The energy of the neutrons is the energy of the neutrons at the point of exiting the plasma in a direction towards the fusion fuel breeding blanket 112.

Preferably, the fusion fuel breeding blanket 112 comprises a flow structure configured for guiding a flow of a liquid fusion fuel, preferably Tritium, a breeding material, preferably a liquid lithium alloy, preferably a lead-lithium (PbLi) alloy. Additionally or alternatively, the flow structure may be configured for guiding a flow of a thermal energy extraction liquid, preferably water, through at least a portion of the fusion fuel breeding blanket 112. In some embodiments, the flow structure is a channel structure within the fusion fuel breeding blanket 112 directing the thermal energy extraction liquid in a direction away from the plasma confinement volume 113 and towards an external heat extraction cycle.

In further examples, the fusion fuel breeding blanket 112 may comprise a lithium ceramic material, such as lithium titanate, $Li_2TiO_3$, or a flibe salt material. Flibe salt is a mixture of lithium fluoride, LiF, and beryllium fluoride, $BeF_2$. Flibe acts as a breeder and a coolant, allowing for efficient heat transfer while breeding tritium. The beryllium component enhances neutron multiplication, thereby increasing the number of neutrons available for tritium production.

The neutron shield 111 is configured to shield the plasma confinement coils from neutrons emitted from the plasma. Preferably, the neutron shield 111 is configured to absorb and/or attenuate neutrons, preferably high-energy neutrons produced during the fusion process. Exemplary neutron shields 111 comprise one or more of a boron-based material, such as boron carbide or borated polyethylene, a lithium-based material, such as lithium hydride or lithium-ceramic composites, a tungsten-based material, a lead-based material, or a hydrogen-rich material, such as water, polyethylene or concrete and/or combinations thereof. Preferably, one or more of the above materials and preferably further materials are used in combination with each other to provide comprehensive shielding.

Preferably, the neutron shield 111 comprises tungsten or a tungsten alloy, preferably the neutron shield 111 is essentially formed from tungsten or a tungsten alloy. Tungsten is most preferred, as the high atomic number and density of tungsten is effective in stopping high-energy neutrons and gamma rays. To reduce the risk of any high-energy neutrons exiting the plasma vessel 110 and penetrating materials, leading to several adverse effects, the neutron shield 111 may be arranged substantially around the entirety of the plasma confinement volume 113, i.e., fully encapsulating the fusion fuel breeding blanket 112 substantially fully encapsulating the plasma confinement volume 113.

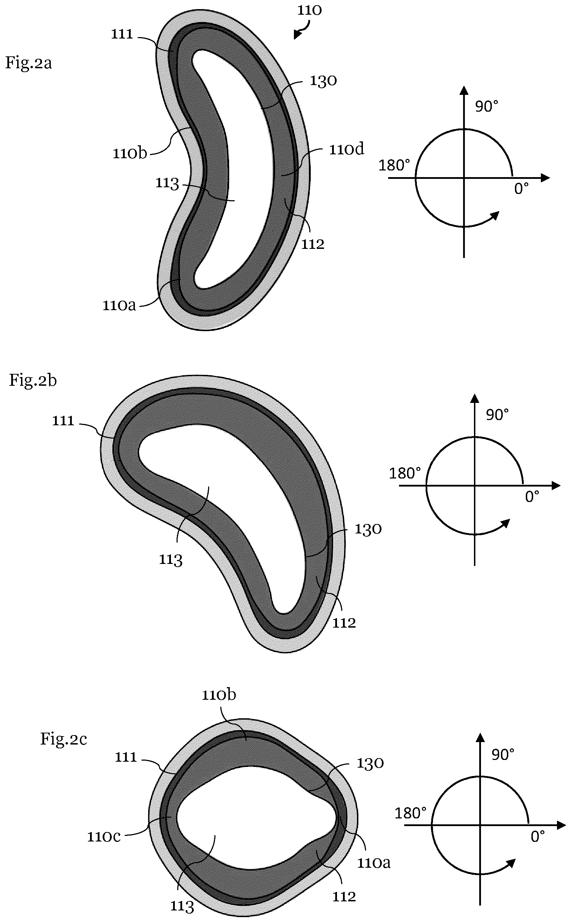

Fig. 2a, Fig. 2 and Fig. 2c show different examples of cross-sections of the plasma vessel 110 in the toroidal direction. The three examples shown in Figs. 2a to 2c may be sections that are adjacent each other in the toroidal direction to form a part of the plasma vessel 110. Figs. 2a to 2c show the neutron shield 111, the fusion fuel breeding blanket 112 and a housing positioned adjacent the neutron shield 111 to facilitate handling and transport of the plasma vessel and the plasma. The housing is optional and the respective region in the figures 2a to 2c may also resemble a maximum available space between the neutron shield 111 and the plasma confinement coils 120.

Adjacent to each of Figs. 2a to 2c is a coordinate system resembling the poloidal angle from 0 to 360°. As can be seen in Figures 2a to 2c, the ratio of a thickness of the fusion fuel breeding blanket 112 to a thickness of the neutron shield 111 varies significantly as a function of the poloidal angle. A significant variation is a variation that is substantially larger than variations through manufacturing impurities and measurement inaccuracies. For example, a significant variation is a variation of the ratio by at least 5%, preferably by at least 7%, preferably by at least 10 %. In some examples, the variation is at least 15%, preferably at least 20%, preferably at least 35%, preferably at least 30%, preferably at least 35%, preferably at least 40%, most preferably at least 43%.

In the following, the varying ratios will be described with reference to certain regions 100a, 100b, 100c, 100d of the plasma vessel. Each of the regions correspond to a certain section of the plasma vessel as a function of a poloidal angle. For example, in Fig. 2a, region 110a may correspond to a section of the plasma vessel with a corresponding ot a poloidal angle of about 270°, whereas region 110d corresponds to a region of a poloidal angle of about 0°.

Exemplary regions 110a of the plasma vessel 110 are regions of the plasma vessel 110 where the ratio of the thickness of the fusion fuel breeding blanket 112 to the thickness of the neutron shield 111 is relatively small. In the regions 110a the proportion of the thickness of the neutron shield 111 to the proportion of the thickness of the fusion fuel breeding blanket 112 as a function of the poloidal angle may be relatively large. Similarly, regions 110b of the plasma vessel 110 are regions of the plasma vessel 110 where the ratio of the thickness of the fusion fuel breeding blanket 112 to the thickness of the neutron shield 111 may be relatively large. In the regions 110b, the proportion of the neutron shield 111 to the proportion of the fusion fuel breeding blanket 112 as a function of the poloidal angle may be relatively small.

The ratio of the thickness of the fusion fuel breeding blanket 112 to the thickness of the neutron shield 111 may be large based on a distance between the (border of) plasma confinement volume 113 and a (expected) position of a plasma confinement coil 120 of the nuclear fusion reactor 100 arranged outside the plasma vessel 110. The (expected) position of the plasma confinement coil 120 may be predefined and dependent on the fusion reactor design.

In the example shown in Fig. 2a, at region 110a of the plasma vessel 110, the thickness of the neutron shield 111 is relatively large compared to the thickness of the fusion fuel breeding blanket 112. This may be a position, where the distance between the plasma confinement volume 130 and the position of a plasma confinement coil 120 of the nuclear fusion reactor 100 arranged outside the plasma vessel 110 is relatively small. Since the overall available space for allocating neutron shield 111 and fusion fuel breeding blanket 112 is small, it may be necessary to provide a larger proportion of shielding to provide sufficient overall shielding at this position.

Similarly, at position 110b of the plasma vessel in Fig. 2a, the thickness of the neutron shield 111 is relatively small compared to the thickness of the fusion fuel breeding blanket 112. This may be a position, where the distance between the plasma confinement volume 130 and the position of a plasma confinement coil 120 of the nuclear fusion reactor 100 arranged outside the plasma vessel 110 is relatively large. Since the overall available space

The same can be seen in the exemplary regions 110a and 110b in Fig. 2c. In region 110a in Fig. 2c, a substantial amount of the thickness of the plasma vessel 110 is made up of the neutron shield 111, wherein only a small proportion of the thickness of the plasma vessel 110 corresponds to the fusion fuel breeding blanket 112. In this example, the ratio between the thickness of the fusion fuel breeding blanket 112 to the thickness of the neutron shield 111 as a function of the poloidal angle is relatively small. In region 110b in Fig. 2c, the ratio between the thickness of the fusion fuel breeding blanket 112 to the thickness of the neutron shield 111 as a function of the poloidal angle is relatively large.

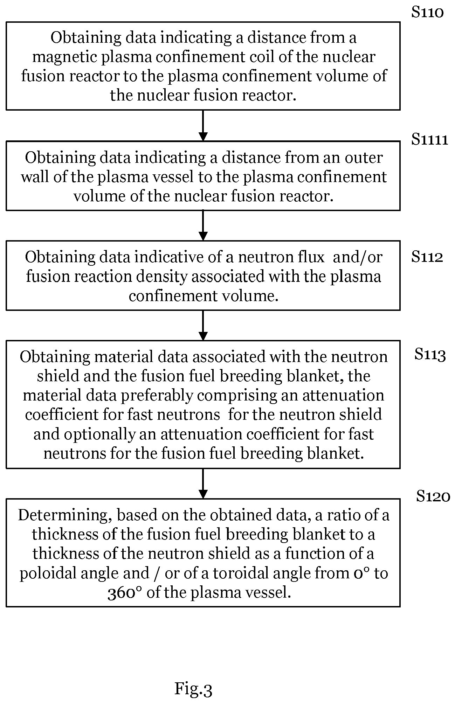

Additionally or alternatively, the ratio of the thickness of the breeding blanket to the thickness of the neutron shield may vary based on a (expected) neutron flux density at the border of the plasma confinement volume 130 to the fusion fuel breeding blanket. The (expected) neutron flux may be predefined and determined using simulation tools. This will be described in more detail with respect to Figs. 3 to 5 below.

For example, in operation of the nuclear fusion reactor, a density of nuclear fusion reactions may be larger in a center region of the plasma confinement volume than in a top and / or bottom region of the plasma confinement volume 113. Accordingly, the ratio of the thickness of the fusion fuel breeding blanket 112 to the thickness of the neutron shield 112, may be larger in the top and / or in the bottom region of the plasma vessel, by 5% of more, than in the central region of the plasma vessel 110.

For example, the ratio of the thickness of the breeding blanket to the thickness of the neutron shield, may be larger in the top and / or in the bottom region of the plasma vessel, by at least 5 %, preferably by at least 10%, preferably by at least 20%, preferably by at least 50%, preferably by at least 80%, preferably by at least 100%, preferably by at least 200%, preferably by at least 500%, preferably by at least 700%, preferably by at least 1000% than in the central region of the plasma vessel.

This is shown, for example, in Fig. 2c. In Fig. 2c, region 110a and 110c may have a similar expected distance between the plasma confinement volume 113 and the plasma confinement coil 120. However, the expected (simulated) neutron flux density in region 110a is larger than the expected (simulated) neutron flux density in region 100c. Accordingly, in region 110a of the plasma vessel 110, the ratio of the thickness of the fusion fuel breeding blanket 112 to the thickness of the neutron shield 111 is smaller compared to the ratio in region 110c of the plasma vessel.

Preferably, the thickness of the neutron shield varies in a range of 3% to 50%, preferably in a range of 5 to 45% and most preferably in a range of 6.9 % to % 41 % of a maximal radius of the vacuum measured from a center of the fusion reactor. Additionally or alternatively, the thickness of the breeding blanket varies in a range of 10% to 60%, preferably in a range of 15 to 55% and most preferably in a range of 18 to % 53 % of a maximal radius of the vacuum vessel measured from the center point of the fusion reactor. Additionally or alternatively, the ratio of the thickness of the breeding blanket to the thickness of the neutron shield is larger or equal to zero and/or smaller or equal to 750 %. Preferably, the above thickness of the neutron shield 111, the thickness of the breeding blanket 112 and or the ratio of the thickness of the breeding blanket 112 to the neutron shield 111 varies with the poloidal angle from 0° to 360°.

The poloidal angle encompasses a range of 360°, preferably a range of 320°, preferably a range of 280°, preferably a range of 240°, preferably a range of 200°, preferably a range of 160°, preferably a range of 120°, preferably a range of 80°, preferably in a range of 40° of the plasma vessel.

In some examples, the poloidal angle and / or of the toroidal angle encompasses a range of 360°, preferably a range of 320°, preferably a range of 280°, preferably a range of 240°, preferably a range of 200°, preferably a range of 160°, preferably a range of 120°, preferably a range of 80°, preferably a range of 40° of the plasma vessel.

In some other examples, the ratio of the thickness of the fusion fuel breeding blanket to the thickness of the neutron shield varies at a rate of 10% per 90°, preferably at a rate of 20% per range of 90°, preferably at a rate of 30% per range of 90°, preferably at a rate of 40% per range of 90°.

In some other examples, the ratio of the thickness of the fusion fuel breeding blanket to the thickness of the neutron shield varies at a rate of 10% per 65°, preferably at a rate of 20% per range of 65°, preferably at a rate of 30% per range of 65°, preferably at a rate of 40% per range of 65°.

In some other examples, the ratio of the thickness of the fusion fuel breeding blanket to the thickness of the neutron shield varies at a rate of 10% per 45°, preferably at a rate of 20% per range of 45°, preferably at a rate of 30% per range of 45°, preferably at a rate of 40% per range of 45°.

In some other examples, the ratio of the thickness of the fusion fuel breeding blanket to the thickness of the neutron shield varies at a rate of 10% per 25°, preferably at a rate of 20% per range of 25°, preferably at a rate of 30% per range of 25°, preferably at a rate of 40% per range of 25°.

In some other examples, the ratio of the thickness of the fusion fuel breeding blanket to the thickness of the neutron shield varies at a rate of 10% per 5°, preferably at a rate of 20% per range of 5°, preferably at a rate of 30% per range of 5°, preferably at a rate of 40% per range of 5°.

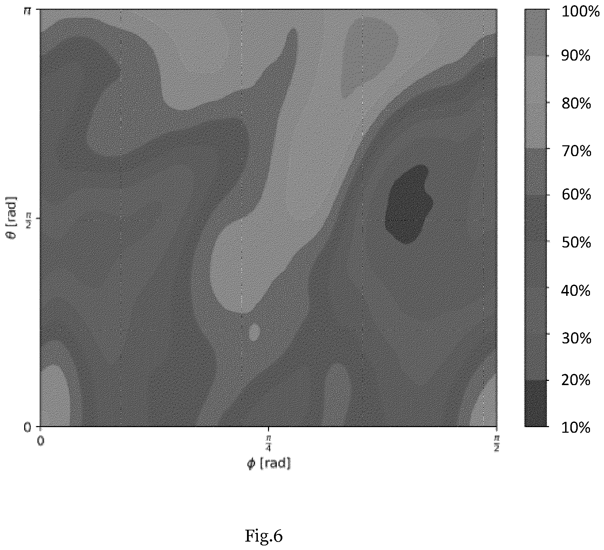

One exemplary section of a neutron shield 111 is shown in Fig. 6. In this portion of the exemplary neutron shield 111, the thickness of the neutron shield 111 in the plasma vessel 110 varies as a function of the angle, wherein the proportion of the thickness of the neutron shield 111 of the total thickness formed by the fusion fuel breeding blanket 110 and the neutron shield 111 varies in a range from 10 % to around 90%.

The above examples are cross sections of the plasma vessel 110 in the toroidal direction where the ratio of the thickness varies as a function of the poloidal angle. All of the above may apply in a similar manner additionally or alternatively for cross sections of the plasma vessel 110 in the poloidal direction where the ratio of the thickness varies as a function of the toroidal angle.

Another aspect of aspects of the present disclosure relates to a stellarator 200. The stellarator according to the present invention comprising the plasma vessel 110 and a plurality of non-planar, superconducting plasma confinement coils 120 for generating a magnetic field for confining a fusion plasma within the plasma confinement region 113. One exemplary stellarator 200 is shown in Fig. 1.

The plurality of plasma confinement coils 120 may be formed such that, in operation of the stellarator 200 as a nuclear fusion reactor, the density of nuclear fusion reactions is larger in the center region of the plasma confinement volume 113 than in a top and / or bottom region of the plasma confinement volume 113. As stated above, in this case, the plasma vessel 110 is preferably provided such that the ratio of the thickness of the breeding blanket to the thickness of the neutron shield, is larger in the top and / or in the bottom region of the plasma vessel, by 5% or more, than in the central region of the plasma vessel. Top and bottom are areas that are defined with respect to the highest mean neutron flux, which is the center portion, wherein the top and bottom are the areas at the furthest distance to the aera with the highest mean neutron flux. The top and bottom typically correspond to a 90° and 270° poloidal angle value, wherein the 0° and/or 180° angle is associated with the area having the highest mean neutron flux.

Additionally or alternatively, the stellarator may include a thermal energy extraction system, operably connected to the fusion fuel breeding blanket 112, and configured to provide the flow of the thermal energy extraction liquid through a portion of the fusion fuel breeding blanket 112 to extract thermal energy generated by nuclear fusion. The thermal energy extraction system and the fusion fuel breeding blanket 112 are optionally configured to provide, during fusion operation of the stellarator 200, an overall water content of at least 5% by volume, preferably at least 7% by volume, preferably at least 10% by volume, preferably at least 12 % by volume, and most preferably at least 12.5 %, optionally and/or at most 20% by volume, preferably at most 18% by volume, preferably at most 16 %, preferably at most 15 % and most preferably at most 12.5 % in the fusion fuel breeding blanket 112.

The water content may be part of a material of the fusion fuel breeding blanket 112, and/or may be provided separately from the fusion fuel breeding blanket material, such as in certain region of the fusion fuel breeding blanket 112, such as in specific (water containing) channels in the fusion fuel breeding blanket for extracting the thermal energy.

Additionally or alternatively, the stellarator may include a fusion fuel extraction system, operably connected to the fusion fuel breeding blanket 112, and configured to provide the flow of the liquid fusion fuel breeding material through a portion of the fusion fuel breeding blanket 112 to generate nuclear fusion fuel by a neutron capture process.

Another aspect of aspects of the present disclosure relates to a computer implemented design method for optimizing a plasma vessel 110 for a nuclear fusion reactor 200. Fig. 3 shows a flow diagram of an exemplary design method.

In a first step S110, data indicating a distance from a magnetic plasma confinement coil 120 of the nuclear fusion reactor 200 to the plasma confinement volume 113 of the nuclear fusion reactor 200 is obtained.

In a second step S112, data indicating a distance from an outer wall of the plasma vessel 110 to the plasma confinement volume 113 of the nuclear fusion reactor 200 is obtained. This data may indicate the amount of available space that can be allocated for the fusion fuel breeding blanket 112 and the neutron shield 111.

In a third step S120, based on the obtained data, the ratio of the thickness of the fusion fuel breeding blanket 112 to the thickness of the neutron shield 111 is determined as a function of a poloidal angle and / or of a toroidal angle from 0° to 360° of the plasma vessel 110.

With the above, it is possible to optimize the ratio of the thicknesses of the fusion fuel breeding blanket 112 and the neutron shield 111 in accordance with the available space in the fusion reactor 200.

This determination may optionally be improved by further considering data associated with the fusion reaction. For example, in an optional step S113, before step S120, data indicative of a neutron flux and/or fusion reaction density associated with the plasma confinement volume 113 is obtained. In step S120, the ratio may further be determined on the data obtained in step S113. This data may indicate the strength and number of high-energy/fast neutrons that exit the plasma confinement volume 113. Preferably, this data indicates a mean path of the fast neutrons that exit the plasma confinement volume 113. Additionally or alternatively, the data indicative of a neutron flux and / or fusion reaction density associated with the plasma confinement volume includes information related to a vector (direction) of the neutron flux leaving the confinement volume. Preferably, the vector of the neutron flux is a normal vector on a surface of the plasma in the plasma confinement volume 113.

With this data the determined ratio of the thickness of the fusion fuel breeding blanket 112 to the thickness of the neutron shield 111 may further incorporate the neutron flux of the plasma. A large neutron flux at the border of the plasma confinement volume 113 may lead to a stronger emission of high-energy/fast neutrons towards sensitive elements of the fusion reactor 200. Since the neutron flux may vary greatly dependent inside the plasma confinement volume 113, the data obtained in step S113 allows to further optimize the shielding and breeding properties of the plasma vessel 110.

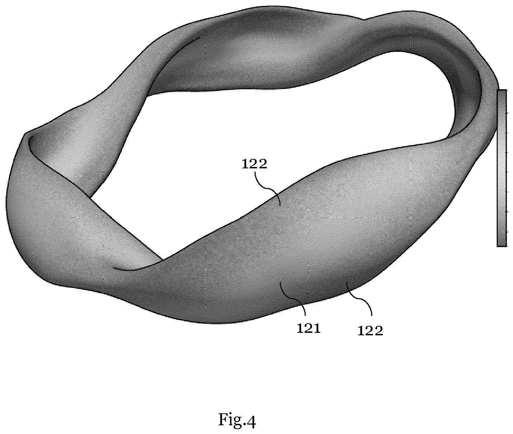

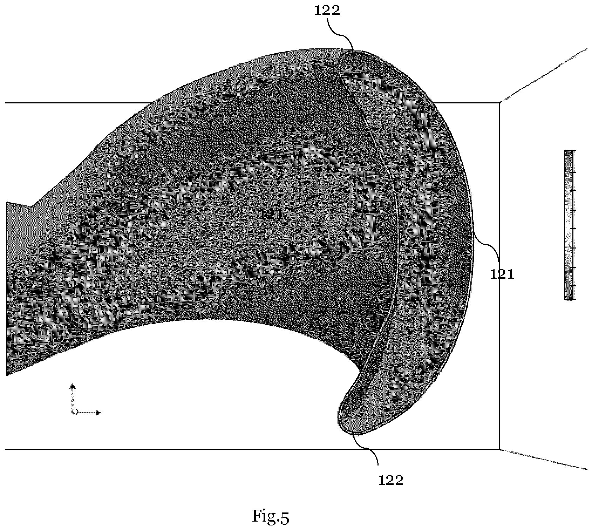

Figures 4 and 5 show exemplary simulations of the mean neutron flux in an exemplary stellarator 200. The simulation results shown in Fig. 4 and 5 may be the data indicative of a neutron flux and/or fusion reaction density associated with the plasma confinement volume 113. As can be seen in Fig. 4, the mean neutron flux density is the largest in the center 121 of the plasma/plasma confinement volume 113. In this area, the mean neutron flux density is about four times larger than at the top/bottom positions 122 of the plasma. At the positions of high mean neutron flux density, such as in the center 121 of the plasma, the ratio may be small, as the thickness of the neutron shield 111 may have a relatively large proportion compared to the thickness of the fusion fuel breeding blanket 112. This may be reflected in regions 110a and 110c in Fig. 2c. Here, even though the distance of the plasma confinement volume to the coil of the stellarator 200 may be similar, the mean neutron flux density at region 110a may be larger, resulting in a determination that the ratio should be smaller in region 110a.

Figure 5 is a cross section of the neutron flux simulation of Fig. 4 in a toroidal direction of the stellarator 200. This section corresponds to the plasma vessel 1110 cross-section of Fig. 2a. As can be seen in Fig. 5, the mean neutron flux density is relatively high in the center 121 of the plasma and relatively small in the top/bottom 122 of the plasma. Even though the mean neutron flux density is about four times larger in the center 121 of the plasma, the ratio of the thickness of the fusion fuel breeding blanket 112 to the thickness of the neutron shield 111 in the corresponding region 110d of the plasma vessel 110 in Fig. 2a is relatively large. This is, because in this example, the distance of the plasma confinement coil to the plasma confinement volume in the region 110d is relatively large, allowing for larger ratio of the thickness of the fusion fuel breeding blanket 112 to the neutron shield 111.

Accordingly, by considering also the data indicative of a neutron flux and/or fusion reaction density, the ratio of the thickness of the fusion fuel breeding blanket 112 to the neutron shield 111 is further improved.

Additionally, or alternatively, in another optional step S113, material data associated with the neutron shield 111 and the fusion fuel breeding blanket 112 is obtained. The material data preferably comprising an attenuation coefficient for fast neutrons for the neutron shield 111 and optionally an attenuation coefficient for fast neutrons for the fusion fuel breeding blanket 112. The attenuation coefficient indicates the amount of attenuation, i.e., the reduction of energy of the high-energy/fast neutrons, per distance travelled within the medium/material. Preferably the attenuation coefficient for fast neutrons is a linear attenuation coefficient indicating the attenuation of the fast neutrons over a thickness of the respective material. The determination step S120 may further be based on the data obtained in optional step S113. Preferably, a first attenuation coefficient is assigned to the neutron shield 111 and a second attenuation coefficient is assigned to the fusion fuel breeding blanket 112, wherein the first attenuation coefficient indicates a stronger attenuation of high energy/fast neutrons than the second attenuation coefficient.

Preferably, the ratio of the thickness of the fusion fuel breeding blanket 112 to the thickness of the neutron shield 111 is determined based on a threshold value associated with the neutron flux at different positions within the plasma vessel 110. Preferably, this determination considers the mean path of the high-energy/-fast neutrons exiting the plasma and the attenuation coefficients of the materials. Preferably, the ratio is determined based on a generalized form of the Beer-Lambert law solved for the intersection of the neutron shield 111 and the fusion fuel blanket 112:

$$I = I_0 e^{-\lambda_1 x} \text{ and } J = I_1 e^{-\lambda_2 x}$$

with I, J being the intensity of the neutrons at path length x, I0,1 being the initial intensity of the neutrons, $\lambda_{1,2}$ being the (linear) attenuation coefficients of the respective medium.

By applying the above calculations, the mean neutron flux density at certain positions can be determined and compared with threshold levels that indicate sufficient shielding from high-energy/fast neutrons. Based on this information, the ratio of the thickness of the fusion fuel breeding blanket 112 to the thickness of the neutron shield 111 can be optimized, wherein the optimal value is a mean neutron flux energy/density similar to or slightly below the threshold value.

The computer implemented design method may be executed on a computing device comprising a processor and a memory device operatively coupled to the processor. The memory may comprise instructions that cause the processor to execute the above design method. Optionally, the memory is a non-transitory storage device. Alternatively, the processor may access a cloud memory having stored thereon the instructions for executing the design method.

Aspects of the present disclosure also relates to a computer program comprising instructions which, when executed by a processor, cause the processor to execute the computer implemented design method for optimizing a plasma vessel for a nuclear fusion reactor. The processor preferably being coupled to a memory for storing the instructions, preferably to a non-transitory storage device.

Aspects of the present disclosure also relates to a computing device comprising a processor and instructions which, when executed by the processor, cause the processor to execute the computer implemented design method for optimizing a plasma vessel for a nuclear fusion reactor. The computing device preferably comprising a memory for storing the instructions, preferably a non-transitory storage device.

FURTHER EXAMPLES

Example 1. A Plasma vessel for a nuclear fusion reactor, comprising a neutron shield and a fusion fuel breeding blanket, the plasma vessel enclosing a plasma confinement volume, wherein a ratio of a thickness of the fusion fuel breeding blanket to a thickness of the neutron shield varies as a function of a poloidal angle and / or of a toroidal angle from 0° to 360° of the plasma vessel, wherein the thickness of the neutron shield varies in a range of 3% to 50%, preferably in a range of 5 to 45% and most preferably in a range of 6.9 % to % 41 % of a maximal radius of the vacuum vessel measured from a center of the fusion reactor; and / or wherein a thickness of the breeding blanket varies in a range of 10% to 60%, preferably in a range of 15 to 55% and most preferably in a range of 18 to % 53 % of a maximal radius of the vacuum vessel measured from the center point of the fusion reactor.

Example 2. The plasma vessel according to example 1, wherein the ratio of the thickness of the breeding blanket to the thickness of the neutron shield increases based on a distance between the plasma confinement volume and a position of a plasma confinement coil of the nuclear fusion reactor arranged outside the plasma vessel.

Example 3. The plasma vessel according to any one of the preceding examples 1 to 2, wherein the ratio of the thickness of the breeding blanket to the thickness of the neutron shield is larger or equal to zero and/or smaller or equal to 750 %.

Example 4. The plasma vessel according to any one of the preceding examples 1 to 3, wherein the breeding blanket comprises a flow structure configured for guiding a flow of a liquid fusion fuel, preferably Tritium, a breeding material, preferably a liquid lithium alloy, preferably a lead-lithium (PbLi) alloy, and / or configured for guiding a flow of a thermal energy extraction liquid, preferably water, through at least a portion of the breeding blanket.

Example 5. The plasma vessel according to any of examples 1 to 4, wherein the neutron shield comprises tungsten or a tungsten alloy, preferably, wherein the neutron shield is essentially formed from tungsten or a tungsten alloy.

Example 6. Stellarator, comprising: a plasma vessel according to any one of preceding examples 1 to 5; and a plurality of non-planar, superconducting plasma confinement coils for generating a magnetic field for confining a fusion plasma within the plasma confinement region.

Example 7. Stellarator of example 6, wherein the plurality of plasma confinement coils is formed such that, in operation of the Stellarator as a nuclear fusion reactor, a density of nuclear fusion reactions is larger in a center region of the plasma confinement volume than in a top and / or bottom region of the plasma confinement volume; and/or wherein the ratio of the thickness of the breeding blanket to the thickness of the neutron shield, is larger in the top and / or in the bottom region of the plasma vessel, by 5% or more, than in the central region of the plasma vessel.

Example 8. Stellarator of examples 6 or 7, in combination with example 4, the stellarator comprising a thermal energy extraction system, operably connected to the breeding blanket, and configured to provide the flow of the thermal energy extraction liquid through a portion of the breeding blanket to extract thermal energy generated by nuclear fusion; wherein, optionally, the thermal energy extraction system and the breeding blanket are configured to provide, during fusion operation of the stellarator, an overall water content of at least 5% by volume in the breeding blanket.

Example 9. Stellarator of any of examples 6 to 8, in combination with example 4, further comprising a fusion fuel extraction system, operably connected to the breeding blanket, and configured to provide the flow of the liquid fusion fuel breeding material through a portion of the breeding blanket to generate nuclear fusion fuel by a neutron capture process.

Example 10. A computer implemented design method for optimizing a plasma vessel for a nuclear fusion reactor, the plasma vessel enclosing a plasma confinement volume and comprising a neutron shield and a fusion fuel breeding blanket, the method comprising the steps of: obtaining data indicating a distance from a magnetic plasma confinement coil of the nuclear fusion reactor to the plasma confinement volume of the nuclear fusion reactor; obtaining data indicating a distance from an outer wall of the plasma vessel to the plasma confinement volume of the nuclear fusion reactor; and determining, based on the obtained data, a ratio of a thickness of the fusion fuel breeding blanket to a thickness of the neutron shield as a function of a poloidal angle and / or of a toroidal angle from 0° to 360° of the plasma vessel.

Example 11. The computer implemented method for optimizing the neutron shield of a plasma vessel according to example 10, further comprising: obtaining data indicative of a neutron flux and / or fusion reaction density associated with the plasma confinement volume; wherein determining the ratio further comprises: determining the ratio based on the neutron flux and / or fusion reaction density.

Example 12. The computer implemented method for optimizing the neutron shield of a plasma vessel according to examples 10 or 11, wherein the data indicative of the neutron flux indicates a vector of the neutron flux leaving the confinement volume.

Example 13. The computer implemented method for optimizing the neutron shield of a plasma vessel according to any one of examples 10 to 12, further comprising: obtaining material data associated with the neutron shield and the fusion fuel breeding blanket, the material data preferably comprising an attenuation coefficient for fast neutrons for the neutron shield and optionally an attenuation coefficient for fast neutrons for the fusion fuel breeding blanket, wherein determining the ratio of the thickness of the fusion fuel breeding blanket to the thickness of the neutron shield based further comprises: determining the ratio of the thickness of the fusion fuel breeding blanket to the thickness of the neutron shield based on the obtained material data.

Example 14. Computer program comprising instructions which, when executed by a processor, cause the processor to execute the computer implemented design method for optimizing a plasma vessel for a nuclear fusion reactor according to any one of examples 10 to 13.

Example 15. Computing device comprising a processor and instructions which, when executed by the processor, cause the processor to execute the computer implemented design method for optimizing a plasma vessel for a nuclear fusion reactor according to any one of examples 10 to 13.

**Claims**

1. Plasma vessel for a nuclear fusion reactor, comprising:

    a neutron shield and a fusion fuel breeding blanket, the plasma vessel enclosing a plasma confinement volume, wherein
    a ratio of a thickness of the fusion fuel breeding blanket to a thickness of the neutron shield varies as a function of a poloidal angle and / or of a toroidal angle from 0° to 360° of the plasma vessel by at least 5 %.

2. The plasma vessel according to claim 1, wherein the ratio of the thickness of the breeding blanket to the thickness of the neutron shield increases based on a distance between the plasma confinement volume and a position of a plasma confinement coil of the nuclear fusion reactor arranged outside the plasma vessel.

3. The plasma vessel according to any one of the preceding claims 1 to 2,

    wherein the thickness of the neutron shield varies in a range of 3% to 50% of a maximal radius of the vacuum vessel measured from a center of the fusion reactor; and / or
    wherein a thickness of the breeding blanket varies in a range of 10% to 60% of a maximal radius of the vacuum vessel measured from the center point of the fusion reactor; and / or wherein the ratio of the thickness of the breeding blanket to the thickness of the neutron shield is larger or equal to zero and/or smaller or equal to 750 %.

4. The plasma vessel according to any one of the preceding claims 1 to 3,
wherein the breeding blanket comprises a flow structure configured for guiding a flow of a liquid fusion fuel, preferably Tritium, a breeding material, preferably a liquid lithium alloy, preferably a lead-lithium (PbLi) alloy, and / or configured for guiding a flow of a thermal energy extraction liquid, preferably water, through at least a portion of the breeding blanket.

5. The plasma vessel according to any of claims 1 to 4, wherein the neutron shield comprises tungsten or a tungsten alloy, preferably, wherein the neutron shield is essentially formed from tungsten or a tungsten alloy.

6. Stellarator, comprising:

   a plasma vessel according to any one of preceding claims 1 to 5; and
   a plurality of non-planar, superconducting plasma confinement coils for generating a magnetic field for confining a fusion plasma within the plasma confinement region.

7. Stellarator of claim 6,

   wherein the plurality of plasma confinement coils is formed such that, in operation of the Stellarator as a nuclear fusion reactor, a density of nuclear fusion reactions is larger in a center region of the plasma confinement volume than in a top and / or bottom region of the plasma confinement volume; and/or
   wherein the ratio of the thickness of the breeding blanket to the thickness of the neutron shield, is larger in the top and / or in the bottom region of the plasma vessel, by 5% or more, than in the central region of the plasma vessel.

8. Stellarator of claim 6 or 7, in combination with claim 4, the stellarator comprising

   a thermal energy extraction system, operably connected to the breeding blanket, and configured to provide the flow of the thermal energy extraction liquid through a portion of the breeding blanket to extract thermal energy generated by nuclear fusion;
   wherein, optionally, the thermal energy extraction system and the breeding blanket are configured to provide, during fusion operation of the stellarator, an overall water content of at least 5 % by volume in the breeding blanket.

9. Stellarator of any of claims 6 to 8, in combination with claim 4, further comprising
a fusion fuel extraction system, operably connected to the breeding blanket, and configured to provide the flow of the liquid fusion fuel breeding material through a portion of the breeding blanket to generate nuclear fusion fuel by a neutron capture process.

10. A computer implemented design method for optimizing a plasma vessel for a nuclear fusion reactor, the plasma vessel enclosing a plasma confinement volume and comprising a neutron shield and a fusion fuel breeding blanket, the method comprising the steps of:

    obtaining data indicating a distance from a magnetic plasma confinement coil of the nuclear fusion reactor to the plasma confinement volume of the nuclear fusion reactor;
    obtaining data indicating a distance from an outer wall of the plasma vessel to the plasma confinement volume of the nuclear fusion reactor; and
    determining, based on the obtained data, a ratio of a thickness of the fusion fuel breeding blanket to a thickness of the neutron shield as a function of a poloidal angle and / or of a toroidal angle from 0° to 360° of the plasma vessel.

11. The computer implemented method for optimizing the neutron shield of a plasma vessel according to claim 10, further comprising:
obtaining data indicative of a neutron flux and / or fusion reaction density associated with the plasma confinement volume; wherein determining the ratio further comprises:
determining the ratio based on the neutron flux and / or fusion reaction density.

12. The computer implemented method for optimizing the neutron shield of a plasma vessel according to claims 10 or 11, wherein the data indicative of the neutron flux indicates a vector of the neutron flux leaving the confinement volume.

13. The computer implemented method for optimizing the neutron shield of a plasma vessel according to any one of claims 10 to 12, further comprising:

    obtaining material data associated with the neutron shield and the fusion fuel breeding blanket, the material data preferably comprising an attenuation coefficient for fast neutrons for the neutron shield and optionally an attenuation coefficient for fast neutrons for the fusion fuel breeding blanket,
wherein determining the ratio of the thickness of the fusion fuel breeding blanket to the thickness of the neutron shield based further comprises: determining the ratio of the thickness of the fusion fuel breeding blanket to the thickness of the neutron shield based on the obtained material data.

14. Computer program comprising instructions which, when executed by a processor, cause the processor to execute the computer implemented design method for optimizing a plasma vessel for a nuclear fusion reactor according to any one of claims 10 to 13.

15. Computing device comprising a processor and instructions which, when executed by the processor, cause the processor to execute the computer implemented design method for optimizing a plasma vessel for a nuclear fusion reactor according to any one of claims 10 to 13.

Fig.1

Fig.2a

Fig.2b

Fig.2c

| |
|---|
| Obtaining data indicating a distance from a magnetic plasma confinement coil of the nuclear fusion reactor to the plasma confinement volume of the nuclear fusion reactor. |

S110

| |
|---|
| Obtaining data indicating a distance from an outer wall of the plasma vessel to the plasma confinement volume of the nuclear fusion reactor. |

S1111

| |
|---|
| Obtaining data indicative of a neutron flux and/or fusion reaction density associated with the plasma confinement volume. |

S112

| |
|---|
| Obtaining material data associated with the neutron shield and the fusion fuel breeding blanket, the material data preferably comprising an attenuation coefficient for fast neutrons for the neutron shield and optionally an attenuation coefficient for fast neutrons for the fusion fuel breeding blanket. |

S113

| |
|---|
| Determining, based on the obtained data, a ratio of a thickness of the fusion fuel breeding blanket to a thickness of the neutron shield as a function of a poloidal angle and / or of a toroidal angle from 0° to 360° of the plasma vessel. |

S120

Fig.3

122

121    122

Fig.4

Fig.5

Fig.6

Europäisches
Patentamt

European
Patent Office

Office européen
des brevets

# EUROPEAN SEARCH REPORT

**Application Number**

EP 24 19 7765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S62 66190 A (TOSHIBA CORP) 25 March 1987 (1987-03-25) * the whole document * | 1 | INV. G21B1/05 G21B1/13 G21B1/17 |
| X | MIYAZAWA JUNICHI ET AL: "Cartridge-Type Helical Blankets Aiming at Easy Construction and Maintenance for the FFHR-d1", PLASMA AND FUSION RESEARCH, vol. 12, no. 0, 1 January 2017 (2017-01-01), pages 1405017-1405017, XP093046503, DOI: 10.1585/pfr.12.1405017 * the whole document * | 1-9 | |
| X | LYYTINEN T ET AL: "Proof-of-principle of parametric stellarator neutronics modeling using Serpent2", NUCLEAR FUSION, PUBLISHING SECTION. VIENNA, AT, vol. 64, no. 7, 7 June 2024 (2024-06-07), XP020501707, ISSN: 0029-5515, DOI: 10.1088/1741-4326/AD4F9F [retrieved on 2024-06-07] * the whole document * | 10-15 | |

**TECHNICAL FIELDS SEARCHED (IPC)**

G21B
G21D

The present search report has been drawn up for all claims

| Place of search | Date of completion of the search | Examiner |
|---|---|---|
| Munich | 17 January 2025 | Manini, Adriano |

EPO FORM 1503 03.82 (P04C01)

## ANNEX TO THE EUROPEAN SEARCH REPORT
## ON EUROPEAN PATENT APPLICATION NO.

EP 24 19 7765

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | Publication date | Patent family member(s) | Publication date |
|---|---|---|---|
| JP S6266190 A | 25-03-1987 | NONE | |